# EUROPEAN PATENT APPLICATION

(11) **EP 3 101 847 A1**
(43) Date of publication of application: **07.12.2016**
(21) Application number: 15742565.3
(22) Date of filing: 20.01.2015
(51) Int. Cl.: H04L 12/70, H04M 1/00, H04M 3/56, H04N 7/15

(54) **COMMUNICATION DEVICE, COMMUNICATION SYSTEM, COMMUNICATION METHOD, AND STORAGE MEDIUM**

(30) Priority: 29.01.2014 JP 2014014096
(71) Applicant: Ricoh Company, Ltd., Tokyo 143-8555 (JP)
(72) Inventor: INOUE, Takeru, Tokyo 143-8555 (JP)
(74) Representative: Schwabe - Sandmair - Marx
(86) International application number: PCT/JP2015/051335
(87) International publication number: WO 2015/115245

(57) **Abstract**

A communication device for performing a communication through a network includes a storing unit configured to store a plurality of threshold values of communication speeds indicative of ranges of communication speeds and, associated therewith, a plurality of displaying methods for indicating conditions of communication in the ranges of communication speeds, respectively, an acquiring unit configured to acquire an available communication speed, and a displaying unit configured to compare the available communication speed with the threshold values of communication speeds stored in the storing unit, determine a range of communication speeds that the available communication speed belongs to, and display a condition of communication in the available communication speed chronologically in a displaying method which corresponds to the determined range of communication speeds.

## Description

### [Technical Field]

An aspect of the present disclosure relates to communication systems.

### [Background Art]

Recently, with an increasing capacity of the Internet connection, there are increasing chances to have a conference using a video conferencing device and a web conferencing application as a communication tool in a business situation, where face-to-face communication with a communication partner is possible.

However, quality of video and audio during a video conference and a web conference is generally dependent on a network environment used for transmission of the conference. Especially, it is often the case that, in a video conference or a web conference through a general Internet connection or a wireless network, the communication band for video and audio in the network becomes narrower, which causes a remarkable decrease in the quality of video and audio during the conference.

Therefore, as a measure for a user to know the condition of a network environment during communications such as a teleconference, a technique of displaying a communication speed of transmission and reception of video, audio, etc., on a user terminal during a conference has been developed and already known in the art.

A technique of acquiring a variety of parameters relating to quality of video and displaying the variety of parameters on a screen using vertex coordinates, dimensions, colors, etc., of a polygon on a plane with a coordinate system, in order to show the values and presence or absence of correlations of each of the parameters indicating the quality of video in an intuitive and quantitative manner is known (for example, see PTL 1).

### [Citation List]

### [Patent Literature]

[PTL 1] Japanese Unexamined Patent Application Publication No. 2005-229400

### [Summary of Invention]

### [Technical Problem]

In the technique of displaying a communication speed of transmission and reception of video and audio during a conference, information concerning the communication speed of transmission and reception of video and audio during a conference is displayed using numerical values and graphs plotting numerical values.

However, for example, just as a quality of video differs so much depending on whether a call quality is high definition (HD) quality (high quality) or standard definition (SD) quality (standard quality) even though communication speeds for video are both 500 Kbps in each case, a numerical value of a communication speed depends on a definition, a frame rate, etc., of a screen of a conference and does not absolutely indicate a quality of video and audio.

An object of the present disclosure is for a user to easily know, when users communicate with each other using terminal devices through a network, whether or not the communication speed of transmission and reception of video, audio, etc., during the communication is enough to maintain a satisfying quality (connection quality) for communication.

### [Solution to Problem]

An aspect of the present disclosure provides a communication device for performing communications through a network. The communication device includes a storing unit configured to store a plurality of threshold values of communication speeds indicative of ranges of communication speeds and, associated therewith, a plurality of displaying methods for indicating conditions of communication in the ranges of communication speeds, respectively, an acquiring unit configured to acquire an available communication speed, and a displaying unit configured to compare the available communication speed with the threshold values of communication speeds stored in the storing unit, determine a range of communication speeds that the available communication speed belongs to, and display a condition of communication in the available communication speed chronologically in a displaying method which corresponds to the determined range of communication speeds.

### [Advantageous Effects of Invention]

According to an aspect of the present disclosure, a user can easily know, when users communicate with each other using terminal devices through a network, whether or not the communication speed of transmission and reception of video, audio, etc., during the communication is enough to maintain a satisfying quality (connection quality) for communication.

### [Brief Description of Drawings]

[FIG.1] FIG. 1 is a diagram of a schematic configuration of a communication system according to an embodiment;
[FIG. 2] FIG. 2 is an external view of a communication terminal device according to the embodiment;
[FIG. 3] FIG. 3 is a diagram of a hardware configuration of the communication terminal device according to the embodiment;
[FIG. 4] FIG. 4 is a functional block diagram of the communication terminal device according to the embodiment;
[FIG. 5] FIG. 5 is a flowchart illustrating a process in the communication terminal device according to the embodiment;
[FIG. 6] FIG. 6 is a flowchart illustrating the process in the communication terminal device according to the embodiment;
[FIG. 7] FIG. 7 is a drawing describing a specific communication band;
[FIG. 8] FIG. 8 is a drawing illustrating an example of threshold values and displaying methods of communication speeds according to the embodiment;
[FIG. 9] FIG. 9 is a drawing illustrating a first display example of the condition of a communication speed during communication;
[FIG. 10] FIG. 10 is a drawing illustrating a second display example of the condition of a communication speed during communication;
[FIG. 11] FIG. 11 is a drawing illustrating a third display example of the condition of a communication speed during communication;
[FIG. 12] FIG. 12 is a drawing illustrating a fourth display example of the condition of a communication speed during communication;
[FIG. 13] FIG. 13 is a drawing illustrating a fifth display example of the condition of a communication speed during communication;
[FIG. 14] FIG. 14 is a drawing illustrating another example of threshold values and displaying methods of communication speeds according to the embodiment; [FIG. 15] FIG. 15 is a sequence diagram illustrating a process of the communication terminal device;
[FIG. 16] FIG. 16 is a flowchart illustrating the process of the communication terminal device; and [FIG. 17] FIG. 17 is a diagram of a schematic configuration of the communication system according to the embodiment.

### [Description of Embodiments]

In the following, a mode for carrying out the present invention is described based on an embodiment below with reference to drawings. The embodiment described in the following is just an example and embodiments to which the present invention is applicable are not limited to the embodiment in the following.

In all drawings for explaining the embodiment, the elements having the same functions are assigned with the same reference signs in order to omit repeated explanations.

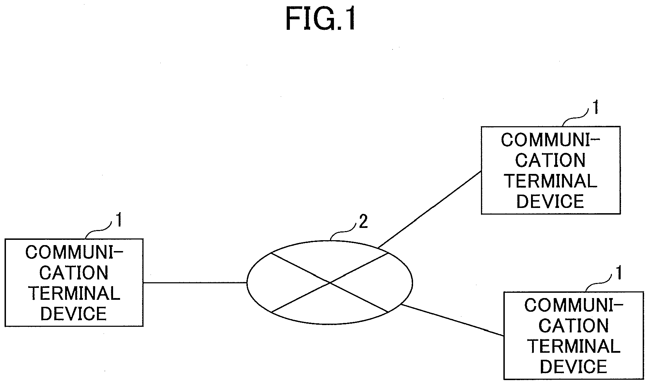

FIG. 1 is a diagram of a schematic configuration of a communication system serving as a communication system according to the embodiment. The communication system is configured with multiple communication terminal devices 1 and a network 2 connecting the communication terminal devices 1. As described later, each of the communication terminal devices 1 is a communication device provided with a camera, a microphone, a speaker, and a display (display device). The network 2 may be a dedicated line or an Internet line. A server, although omitted in FIG. 1, may be connected to the network 2 so as to be shared by the communication terminal devices.

Multiple users have communications such as a teleconference, etc., through the network 2, using communication terminal devices 1. Here, data such as video, audio, documents, etc., are transmitted and received among the communication terminal devices 1. The quality of video, audio, etc., is dependent on the network environment used for transmission of the communication, and thus, when the communication band used in the network 2 becomes narrower and the communication speed of transmission and reception of video, audio, etc., decreases, the quality of video, audio, etc., becomes lower.

In the communication terminal device 1, communication speeds during communications are preliminarily categorized into groups and, for each of the groups, a threshold value of the communication speeds and a displaying method to show the condition of communication in the communication speeds are stored. Then, when communications such as a teleconference, etc., are held through the network 2, the communication terminal device 1 acquires a communication speed during the communications, compares the acquired value of the communication speed with the stored threshold values of communication speeds, and thereby determines a displaying method to show the condition of the communication speed during the communications based on the acquired value of the communication speed compared with the stored threshold values of communication speeds, so as to display the condition of the communication speed during the communications in the determined displaying method. Then, the communication terminal device 1 acquires a communication speed during the communications on a regular or irregular basis and provides the condition of the communication speed during the communications in such a determined displaying method as an update, so as to show the condition of the communication speed chronologically.

For example, a communication speed during communications is shown in green when the communication speed during the communications is in a range (group) where connection quality for communication is fully satisfying, and is shown in red when in a range (group) where connection quality for communication is not satisfying. In this way, a user can intuitively know whether or not the communication speed for the communications is enough to maintain satisfying connection quality for communications, in other words, satisfying quality of video, audio, etc. Furthermore, when a quality of video and audio becomes lower during a conference, a user can easily know whether the cause is a decreased communication speed or another.

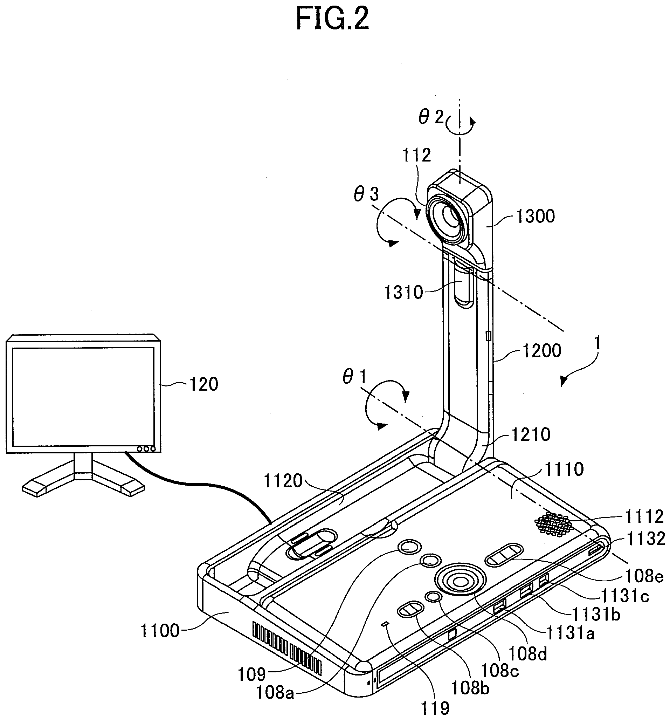

FIG. 2 is an external view of the communication terminal device 1 according to the embodiment. Here, a commonly used personal computer and other terminal devices may be used as a communication terminal device 1, as long as the terminal device is provided with a camera, a microphone, a speaker, etc.

In FIG. 2, the communication terminal device 1 is provided with a chassis 1100, an arm 1200, and a camera housing 1300. The chassis 1100 accommodates a circuit board mounted with a variety of electronic parts such as a central processing unit (CPU) and a memory, a microphone, and a speaker.

On the front upper surface of the chassis 1100 is formed an operation panel 1110, where a variety of operation buttons 108a through 108e, a power switch 109, an alarm lamp 119, etc., are provided. Furthermore, the operation panel 1110 is provided with a number of audio-output holes 1112 for a built-in speaker. On the rear upper surface of the chassis 1100 is formed a concave accommodating section 1120 for accommodating the arm 1200 and the camera housing 1300.

On the front surface of the chassis 1100 is provided with multiple connection ports 1131a through 1131c for connecting to external devices, as well as a sound collecting hole 1132 for a built-in microphone. On the rear surface of the chassis 1100 is also provided with non-illustrated connection ports for connecting to external devices, and a display (display device) 120 is connected to one of the ports through a cable.

The arm 1200 is attached to the chassis 1100 by the intermediary of a first torque hinge 1210, so as to be rotatable vertically in the range of a tilt angle θ1 of 0 through approximately 135 degrees. FIG. 2 illustrates a state where the tilt angle θ1 is at 90 degrees. In a case where the tilt angle θ1 is at 0 degrees, the arm 1200 and the camera housing 1300 are accommodated in the accommodating section 1120 of the chassis 1100.

The camera housing 1300 is provided with a camera 112. The camera housing 1300 is attached to the arm 1200 by the intermediary of a second torque hinge 1310, so as to be rotatable vertically and horizontally in the range of a pan angle θ2 of ±180 degrees and in the range of a tilt angle θ3 of ±45 degrees. Therefore, the camera 112 also rotates vertically and horizontally to capture an image of a user, a document, a room, etc.

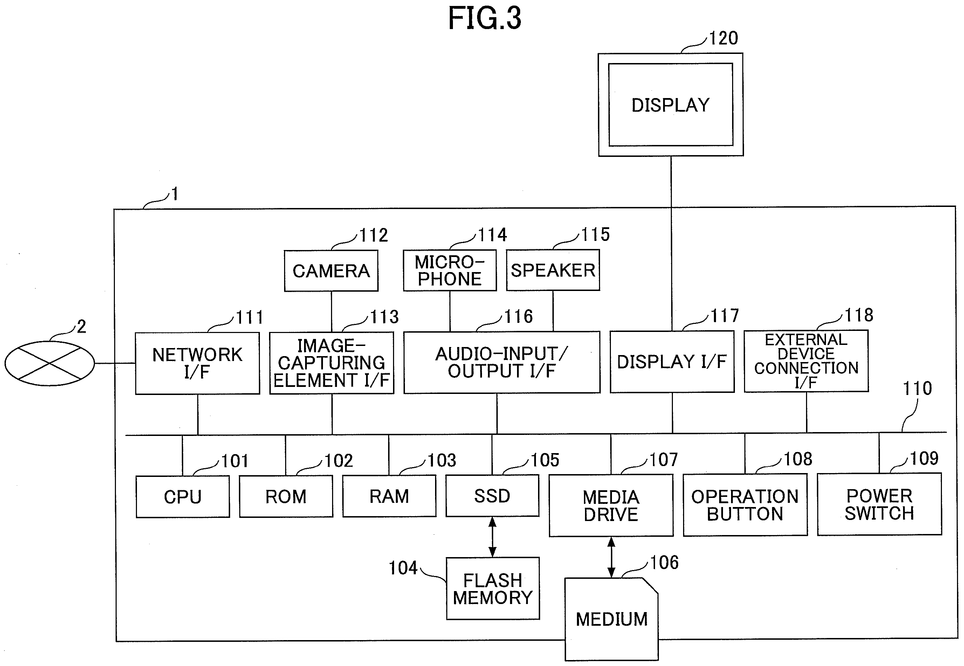

FIG. 3 is a diagram illustrating an example of a hardware configuration of the communication terminal device 1 according to the embodiment. The communication terminal device 1 includes a CPU 101 controlling actions of the entire terminal device and performing necessary processing, a read only memory (ROM) 102 storing programs such as an initial program loader (IPL) used for driving the CPU 101, a random access memory (RAM) 103 used as a work memory of the CPU 101, a flash memory 104 storing programs executed by the CPU 101, various kinds of data such as video, audio, and others, etc., a solid state drive (SSD) 105 controlling read and write of programs, various kinds of data, etc., on the flash memory 104 under the control of the CPU 101, a media drive 107 controlling read and write of data, etc., on an external recording medium 106, a variety of operation buttons 108 (a general term for 108a through 108e in FIG. 2), the power switch 109, a variety of interfaces (I/F) 111, 113, 116, 117, and 118, and an internal bus 110 connecting each of the mentioned parts.

The communication terminal device 1 further includes the camera 112, a microphone 114, and a speaker 115, and the display (display device) 120 is provided externally thereto. Moreover, the display 120 may be configured to be integral with the communication terminal device 1.

The camera 112 is connected to an image-capturing element I/F 113, and the microphone 114 and the speaker 115 are connected to an audio-input/output I/F 116. The display 120 is connected to a display I/F 117. If necessary, various external devices are connected to an external device connection I/F 118 through, for example, the connection ports 1131a through 1131c in FIG. 2. The network 2 is connected to a network I/F 111.

Moreover, programs executed by the CPU 101 may be stored in the ROM 102, not in the flash memory 104. Furthermore, a hard disk (HDD), etc., may be substituted for the flash memory 104.

During communications such as a teleconference, images (video data) of a user, a document, etc., captured by the camera 112 are transmitted to the network 2 through the image-capturing element I/F 113 and the network I/F 111, and are simultaneously displayed on the display 120 through the display I/F 117. Sound including voice (audio signal) of a user collected on the microphone 114 is transmitted to the network 2 through the audio-input/output I/F 116 and the network I/F 111. Images (video data) received from the network 2 are displayed on the display 120 through the network I/F 111 and the display I/F 117. Furthermore, audio (audio signal) received from the network 2 is output to the speaker 115 through the network I/F 111 as well and the audio-input/output I/F 116.

The CPU 101 controls the actions of the network I/F 111, the image-capturing element I/F 113, the audio-input/output I/F 116, the display I/F 117, etc., and controls various kinds of processing such as compression and decompression on video and audio transmitted and received through the network I/F 111. Additionally, the processes of compression, decompression, etc., may be performed using a dedicated circuit, separately from the CPU 101.

Furthermore, the CPU 101 monitors a communication speed of video, audio, etc., which are transmitted and received through the network I/F 111 during communications, and identifies whether or not the condition of communication in the communication speed is enough to maintain satisfying connection quality for communication, in other words, satisfying quality of video, audio, etc. Then, the CPU determines a displaying method to show the condition of communications in the communication speed, and displays the condition of the communication speed during the communications on the display 120 through the display I/F 117 in the determined displaying method.

In the following, the configuration and the use of the communication terminal device according to the embodiment are described.

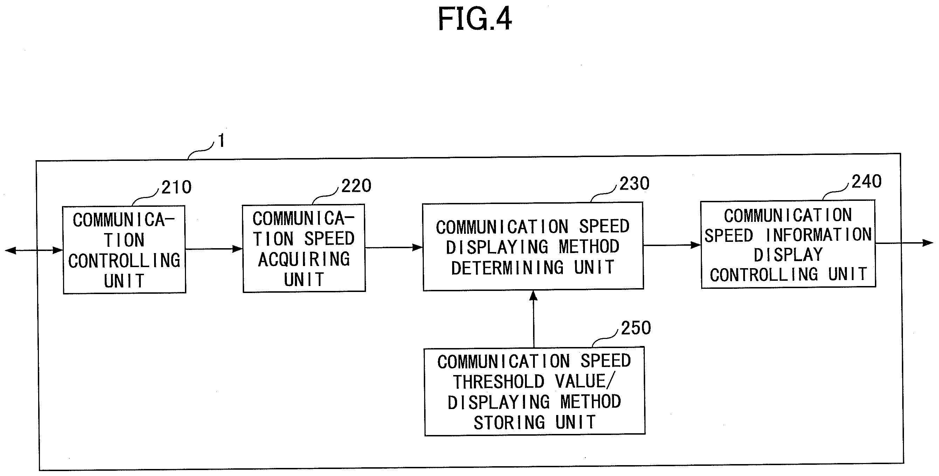

FIG. 4 is a functional block diagram of the main configuration of the communication terminal device according to the embodiment. In FIG. 4, the communication terminal device 1 includes a communication controlling unit 210, a communication speed acquiring unit 220, a communication speed displaying method determining unit 230, a communication speed information display controlling unit 240, and a communication speed threshold value/displaying method storing unit 250. Here, the communication controlling unit 210 corresponds to the network I/F 111 in FIG. 3. The functions of the communication speed acquiring unit 220, the communication speed displaying method determining unit 230, and the communication speed information display controlling unit 240 are executed by cooperation of the CPU 101 and predetermined programs stored in the ROM 102 or the flash memory 104 in FIG. 3. The communication speed threshold value/displaying method storing unit 250 corresponds to a predetermined storage area in the flash memory 104 in FIG. 3.

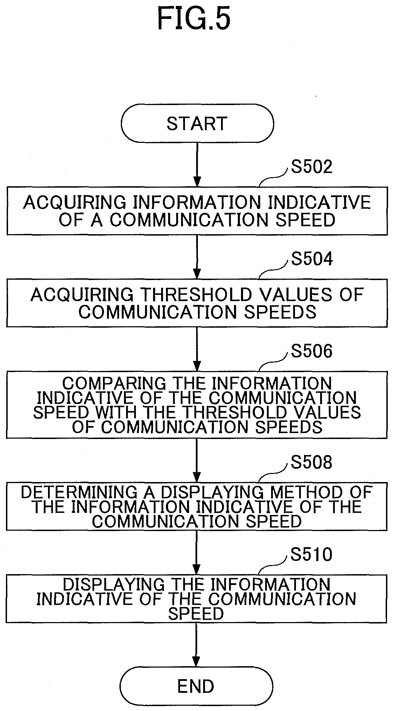

FIG. 5 illustrates a flowchart of a process executed by the communication speed acquiring unit 220, the communication speed displaying method determining unit 230, and the communication speed information display controlling unit 240 in FIG. 4. As described above, the programs for executing the process are stored in the ROM 102 or the flash memory 104 in FIG. 3. Additionally, the programs may be stored in a computer-readable recording medium (the external recording medium 106, etc.) so as to be distributed.

Furthermore, FIG. 5 is a drawing illustrating an example of a process in the connection condition of communication displaying method according to the present embodiment.

During communications such as a teleconference through the network 2 by multiple users respectively using the communication terminal devices 1, the communication controlling unit 210 (the network I/F 111 in FIG. 3) of the communication terminal device 1 performs controlling of transmission and reception of video, audio, etc., with the other communication terminal devices. Therefore, the communication speed of transmission and reception of video, audio, etc., is in control of the communication controlling unit 210.

During communications such as a teleconference through the network 2, the communication speed acquiring unit 220 acquires information indicative of a communication speed of video, audio, etc., from the communication controlling unit 210 (step S502). Then, the communication speed acquiring unit 220 sends the acquired communication speed to the communication speed displaying method determining unit 230. Here, an acquisition of a communication speed is performed automatically when the communication terminal device 1 is booted or in response to a user operation.

In the communication speed threshold value/displaying method storing unit 250, communication speeds during communications are preliminarily categorized into groups and, for each of the groups, a threshold value of a communication speed corresponding to each of the communication speeds and a displaying method to show the condition of communication in the communication speeds are stored. The specific configuration of the communication speed threshold value/displaying method storing unit 250 is described later.

During communications, after receiving a communication speed from the communication speed acquiring unit 220, the communication speed displaying method determining unit 230 acquires threshold values of communication speeds from the communication speed threshold value/displaying method storing unit 250 (step S504).

During communications, the communication speed displaying method determining unit 230 compares a communication speed sent from the communication speed acquiring unit 220 with acquired threshold values of communication speeds, identifies a group that the communication speed during the communication belongs to (step S506), and then determines a displaying method to show the condition of communication in the communication speed during the communications (step S508). Then, the communication speed displaying method determining unit 230 provides the determined displaying method to the communication speed information display controlling unit 240.

The communication speed information display controlling unit 240 controls displaying of the display 120 through the display I/F 117, so as to show the condition of communication in a communication speed during communications according to a displaying method provided by the communication speed displaying method determining unit 230 (step S510).

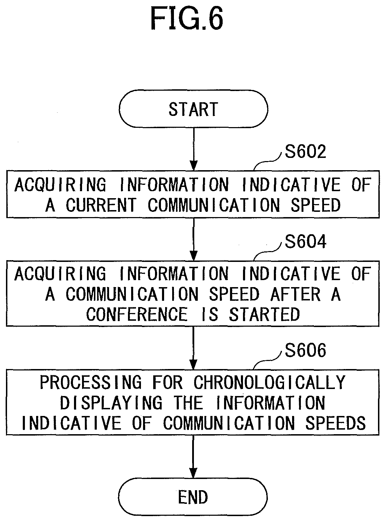

FIG. 6 illustrates a flowchart of a process for updating communication speed information shown by the communication speed acquiring unit 220, the communication speed displaying method determining unit 230, and the communication speed information display controlling unit 240 in FIG. 4. As described above, the programs for executing the process in the flowchart for updating the display of communication speed information are stored in the ROM 102 or the flash memory 104 in FIG. 3. Additionally, the programs may be stored in a computer-readable recording medium (the external recording medium 106, etc.) so as to be distributed.

Furthermore, FIG. 6 is a drawing illustrating an example of a process in the connection condition of communication displaying method according to the embodiment.

During communications such as a teleconference through the network 2 by multiple users respectively using the communication terminal devices 1, the communication controlling unit 210 (the network I/F 111 in FIG. 3) of the communication terminal device 1 performs controlling of transmission and reception of video, audio, etc., with the other communication terminal devices. Therefore, the communication speed of transmission and reception of video, audio, etc., is under the control of the communication controlling unit 210.

The communication speed acquiring unit 220 acquires a current communication speed for video, audio, etc., from the communication controlling unit 210 (step S602). Then, the communication speed acquiring unit 220 sends the acquired current communication speed to the communication speed displaying method determining unit 230.

During communications such as a teleconference through the network 2, the communication speed acquiring unit 220 acquires a communication speed for video, audio, etc., from the communication controlling unit 210 (step S604). Then, the communication speed acquiring unit 220 sends the acquired current communication speed to the communication speed displaying method determining unit 230.

After receiving a communication speed from the communication speed acquiring unit 220, the communication speed displaying method determining unit 230 acquires threshold values of communication speeds from the communication speed threshold value/displaying method storing unit 250.

During communications, the communication speed displaying method determining unit 230 compares a communication speed sent from the communication speed acquiring unit 220 with acquired threshold values of communication speeds, thereby identifies a group that the communication speed during the communication belongs to, and then determines a displaying method to show the condition of the communication speed during the communication. Then, the communication speed displaying method determining unit 230 provides the determined displaying method to the communication speed information display controlling unit 240.

The communication speed information display controlling unit 240 controls displaying of the display 120 through the display I/F 117, so as to show the condition of the communication speed during the communications chronologically according to displaying methods provided by the communication speed displaying method determining unit 230 (step S606).

Next, the specific actions of the communication speed acquiring unit 220, the communication speed displaying method determining unit 230, and the communication speed information display controlling unit 240 in FIG. 4 are described along with a specific configuration of the communication speed threshold value/displaying method storing unit 250.

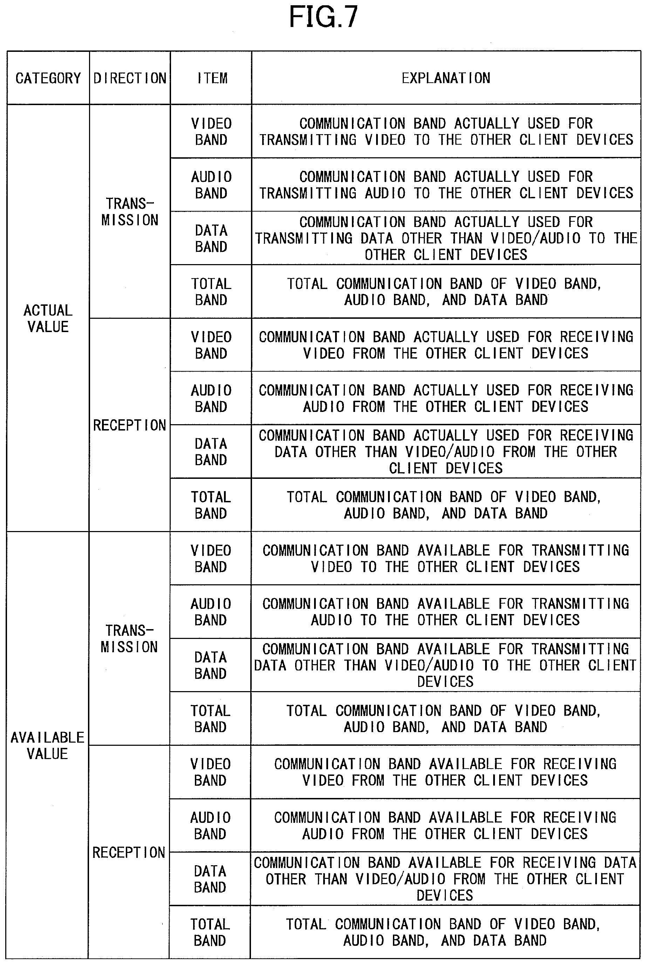

FIG. 7 is a drawing describing the specific communication band addressed in the present embodiment. As illustrated in FIG. 7, actual value and available value are provided for the subject communication band. Actual value refers to observed values, and available value refers to bandwidths available for transmission of information such as video, audio, and data. Specifically, actual value refers to observed values of effective speeds, effective bandwidths, etc., and available value refers to theoretical values.

With regard to actual value, the subject communication band includes communication bands which are actually used when a communication terminal device transmits information such as video, audio, and other data, to other communication terminal devices, as well as communication bands which are actually used when a communication terminal device receives information such as video, audio, and other data, from other communication terminal devices.

Furthermore, with regard to available value, the subject communication band includes communication bands which are available when a communication terminal device transmits information such as video, audio, and other data, to other communication terminal devices, as well as communication bands which are available when a communication terminal device receives information such as video, audio, and other data, from other communication terminal devices.

In FIG. 4, the communication speed acquiring unit 220 acquires from the communication controlling unit 210 (specifically, the network I/F 111 in FIG. 3) communication speeds which are available when the communication terminal device 1 transmits video, audio, data, etc., to other communication terminal devices, and then sums them up to acquire a transmission communication speed. Likewise, the communication speed acquiring unit 220 acquires from the communication controlling unit 210 (specifically, the network I/F 111 in FIG. 3) communication speeds which are available when the communication terminal device 1 receives video, audio, data, etc., from other communication terminal devices, and then sums them up to acquire a reception communication speed. The communication speed acquiring unit 220 sends the transmission communication speed and the reception communication speed to the communication speed displaying method determining unit 230.

Further, in a case where the total transmission communication speed and the total reception communication speed for video, audio, data, etc., are in control of the communication controlling unit 210, the communication speed acquiring unit 220 may acquire the total transmission communication speed and the total reception communication speed directly from the communication controlling unit 210.

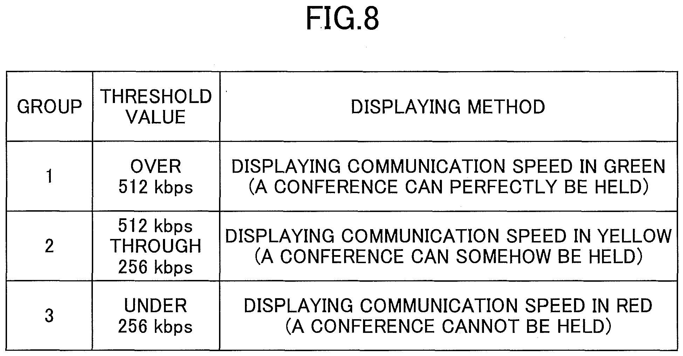

FIG. 8 is drawing illustrating a specific example of threshold values and displaying methods of communication speeds stored in the communication speed threshold value/displaying method storing unit 250. In the example of FIG. 8, communication speeds for communications (such as a conference) are categorized into three groups, and threshold values of communication speeds corresponding to each group are preset, so as to distinguish between the conditions of the communication speeds in each of the groups using different colors. In other words, multiple threshold values of communication speeds which indicate ranges of communication speeds respectively correspond to a displaying method to show the condition of communications in each of the ranges of communication speeds. Here, the number of groups may be two or more.

The communication speed displaying method determining unit 230 compares a communication speed (a transmission band speed and a reception band speed) sent from the communication speed acquiring unit 220 with threshold values of communication speeds stored in the communication speed threshold value/displaying method storing unit 250, identifies a group that the communication speed belongs to, and then determines a displaying method. Here, as an example, the transmission communication speed is 1500 Kbps and the reception communication speed is 1000 Kbps.

In the case of the example of FIG. 8, the communication speed displaying method determining unit 230 refers to the communication speed threshold value/displaying method storing unit 250, and determines that the transmission communication speed of 1500 Kbps belongs to the group 1 and that the displaying method is in green. Likewise, it is determined that the reception communication speed of 1000 Kbps belongs to the group 1 and that the displaying method is in green.

The communication speed information display controlling unit 240 controls displaying of the display 120 through the display I/F 117, so as to show the condition of a communication speed (the transmission communication speed and the reception communication speed) during communications according to a displaying method determined by the communication speed displaying method determining unit 230. The communication speed displaying method determining unit 230 and the communication speed information display controlling unit 240 may together be referred to as a display unit.

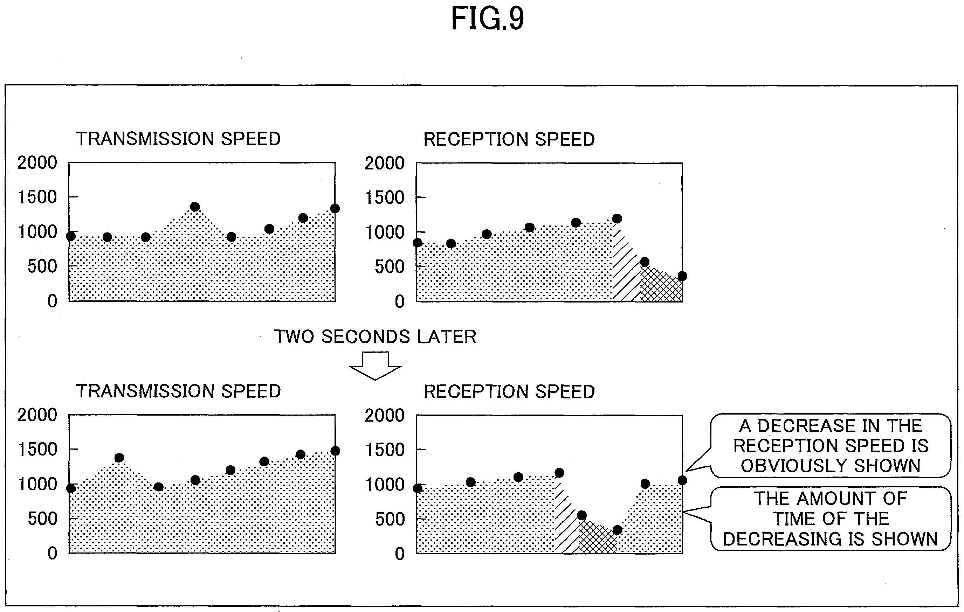

FIG. 9 is a drawing illustrating display examples on the display 120. In FIG. 9, the vertical axis indicates communication speed, and the horizontal axis indicates time. The upper side of FIG. 9 is a display example before an update, indicative of a transmission communication speed and a reception communication speed immediately after a decrease in the reception communication speed. The lower side of FIG. 9 is a display example after an update, indicative of the transmission communication speed and the reception communication speed two seconds after the decrease in the reception communication speed, where the reception communication speed increased. In the example illustrated in FIG. 9, the transmission communication speed and the reception communication speed are updated every second.

Suppose that, during a conference, a reception communication speed decreases and falls below a threshold value of the reception communication speed, causing a decrease in the quality, disturbance, and delay of video and audio. It is assumed that many users take a few seconds before realizing the decrease in the quality of video and audio. On the display 120, a communication speed during communications is displayed in a way that makes visual differences depending on whether the communication speed is in a range where a conference can perfectly be held, in a range where a conference can somehow be held, or in a range where a conference cannot be held. In FIG. 9, communication speeds are displayed in a way that makes visual differences using different colors (expressed using hatchings). Hence, if a user sees the display two seconds after the decrease in the quality of video and audio, the user can recognize the comparative decrease of the reception communication speed and can easily assume how the quality of video during the conference is affected by such a decrease of the reception communication speed.

Displaying methods for the conditions of communication speeds are not limited to the example in FIG. 8. For example, other than using different colors, a variety of displaying methods such as using patterns, characters (or words), and drawings, or combinations of such displaying methods may be applicable, as well as using sound as an alert.

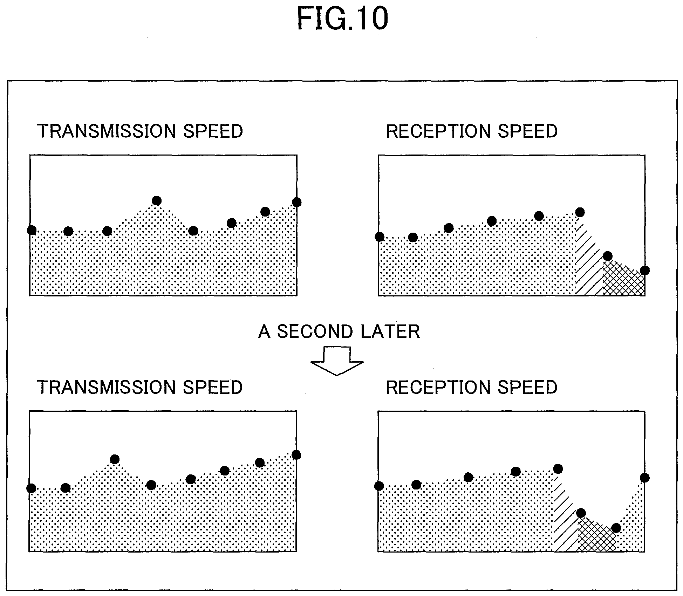

FIG. 10 through FIG. 13 illustrate a variety of display examples other than the example in FIG. 9. In FIG. 10 through FIG. 13, differences of colors are expressed using hatchings.

In FIG. 10, scales of communication speed in the vertical axis are not displayed and the plotting width of time in the horizontal axis is fixed. The upper side of FIG. 10 is a display example before an update, indicative of a transmission communication speed and a reception communication speed immediately after a decrease in the reception communication speed. The lower side of FIG. 10 is a display example after an update, indicative of the transmission communication speed and the reception communication speed a second after the decrease in the reception communication speed, where the reception communication speed increased. In the example illustrated in FIG. 10, the transmission communication speed and the reception communication speed are updated every second. In FIG. 10, communication speed in the vertical axis is indicated without using scales but in a way that makes visual differences using different colors so that the latest decrease in the communication speed is easily recognized.

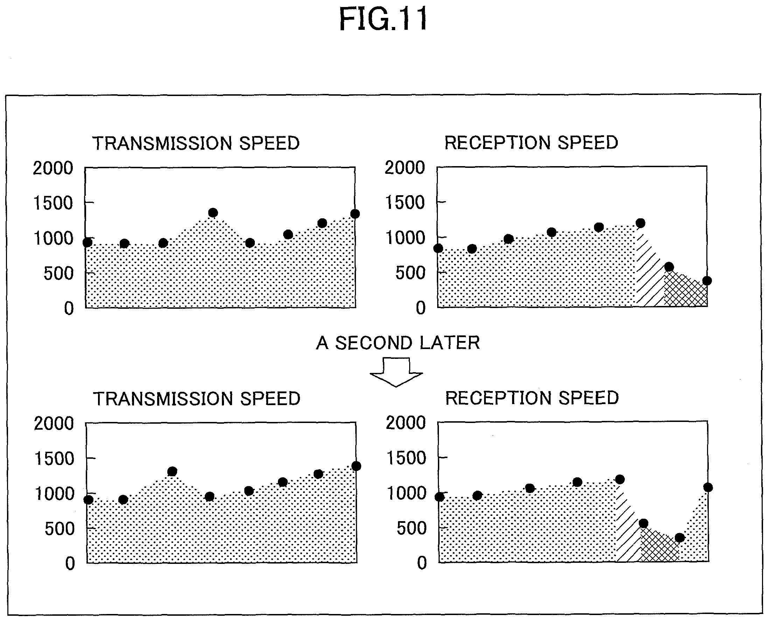

In FIG. 11, scales of communication speed in the vertical axis are displayed and the plotting width of time in the horizontal axis is fixed. The upper side of FIG. 11 is a display example before an update, indicative of a transmission communication speed and a reception communication speed immediately after a decrease in the reception communication speed. The lower side of FIG. 11 is a display example after an update, indicative of the transmission communication speed and the reception communication speed a second after the decrease in the reception communication speed, where the reception communication speed increased. In the example illustrated in FIG. 11, the transmission communication speed and the reception communication speed are updated every second. In FIG. 11, communication speed in the vertical axis is indicated using scales so that the relationship between the communication speed and the connection quality in the conference is easily understood, and is indicated in a way that makes visual differences using different colors so that the latest decrease in the communication speed is easily recognized.

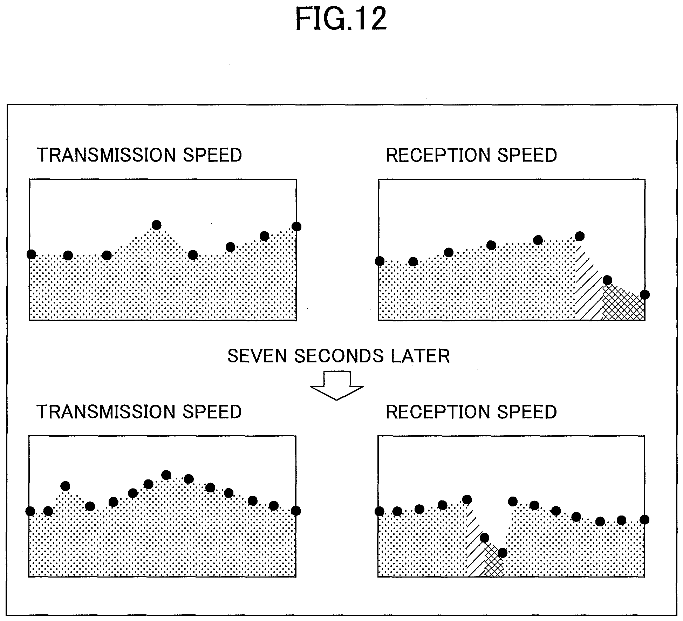

In FIG. 12, scales of communication speed in the vertical axis are not displayed and the plotting width of time in the horizontal axis is variable. The upper side of FIG. 12 is a display example before an update, indicative of a transmission communication speed and a reception communication speed immediately after a decrease in the reception communication speed. The lower side of FIG. 12 is a display example after an update, indicative of the transmission communication speed and the reception communication speed seven seconds after the decrease in the reception communication speed, where the reception communication speed increased. In the example illustrated in FIG. 12, the transmission communication speed and the reception communication speed are updated every second. In FIG. 12, communication speed in the vertical axis is indicated without using scales but in a way that makes visual differences using different colors so that a decrease in the communication speed during the conference is easily recognized.

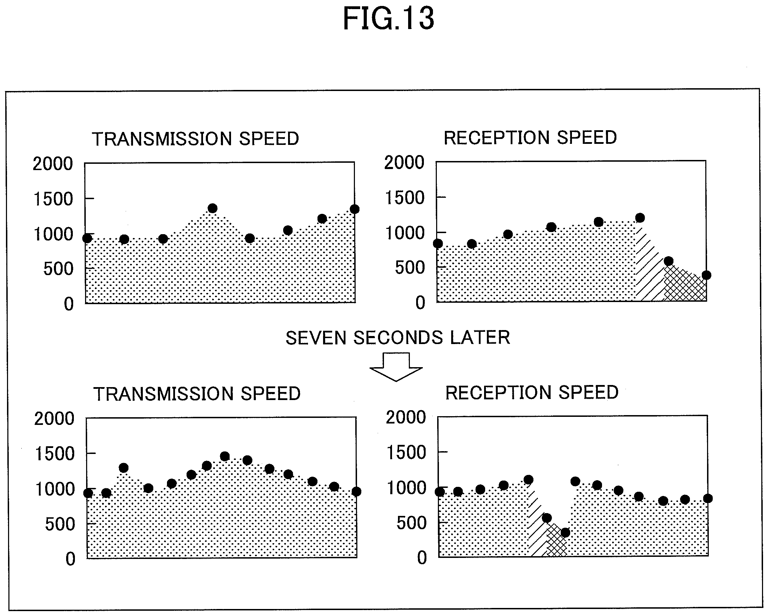

In FIG. 13, scales of communication speed in the vertical axis are displayed and the plotting width of time in the horizontal axis is variable.

The upper side of FIG. 13 is a display example before an update, indicative of a transmission communication speed and a reception communication speed immediately after a decrease in the reception communication speed. The lower side of FIG. 13 is a display example after an update, indicative of the transmission communication speed and the reception communication speed seven seconds after the decrease in the reception communication speed, where the reception communication speed increased. In the example illustrated in FIG. 12, the transmission communication speed and the reception communication speed are updated every second. In FIG. 13, communication speed in the vertical axis is indicated using scales so that the relationship between the communication speed and the connection quality in the conference is easily understood, and is indicated in a way that makes visual differences using different colors so that the latest decrease in the communication speed is easily recognized.

As illustrated in FIG. 9 through FIG. 13, for displaying communication speed information based on the acquired communication speed information, scales may be included and a plotting width may be variable. Furthermore, displays of image and sound during conference may be changed using collaborations of multiple threshold values in such a way as providing threshold values for displaying colors and scales so as to change displays of numerical values.

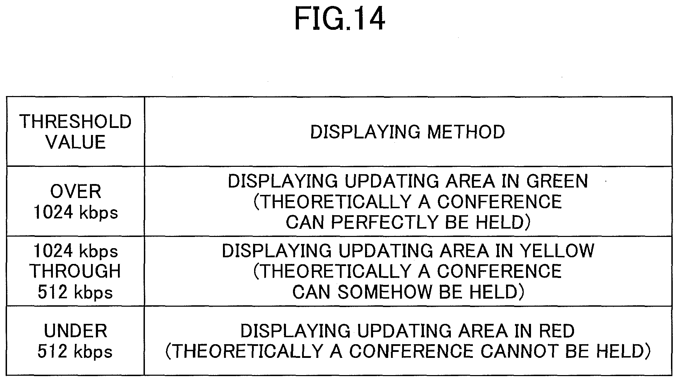

FIG. 14 illustrates another example of threshold values and displaying methods for communication speeds. As illustrated in FIG. 14, threshold values may be different compared to FIG. 8.

### <The action of the communication terminal device 1>

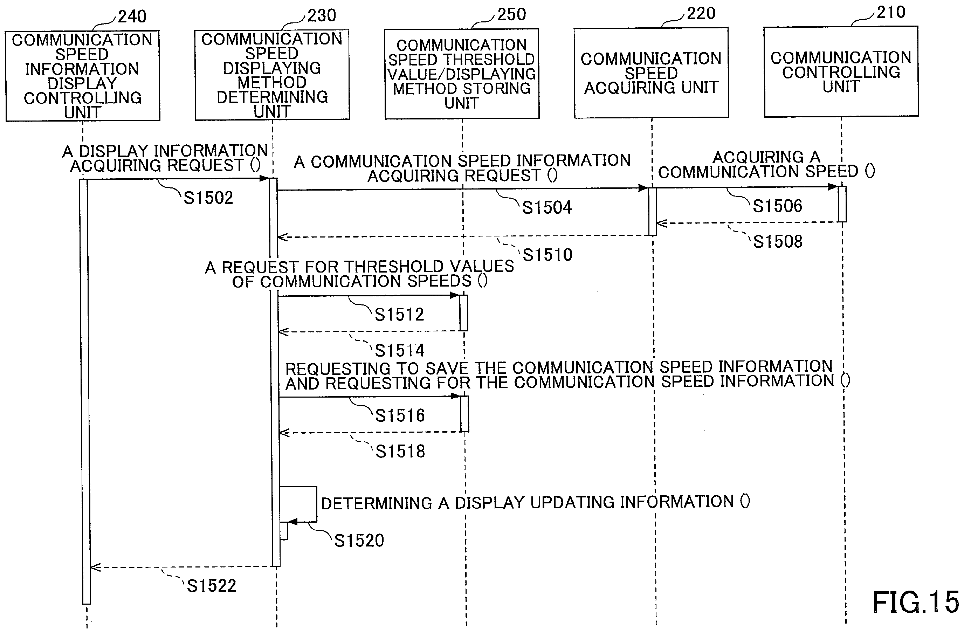

FIG. 15 illustrates an embodiment relating to an action of the communication terminal device 1.

In step S1502, the communication speed information display controlling unit 240 enters a display information acquiring request into the communication speed displaying method determining unit 230.

In step S1504, the communication speed displaying method determining unit 230 sends a communication speed information acquiring request to the communication speed acquiring unit 220.

In step S1506, the communication speed acquiring unit 220 acquires a communication speed from the communication controlling unit 210 in response to the communication speed requested from the communication speed displaying method determining unit 230.

In step S1508 and S1510, the communication speed acquiring unit 220 acquires information indicative of the communication speed from the communication controlling unit 210, and then enters the information indicative of the communication speed into the communication speed displaying method determining unit 230.

In step S1512, the communication speed displaying method determining unit 230 sends a request for threshold values of communication speeds to the communication speed threshold value/displaying method storing unit 250.

In step S1514, the communication speed displaying method determining unit 230 receives threshold values of communication speeds from the communication speed threshold value/displaying method storing unit 250.

In step S1516, the communication speed displaying method determining unit 230 requests to have the communication speed information saved and requests to receive the communication speed.

In step S1518, the communication speed displaying method determining unit 230 acquires the information indicative of the communication speed.

In step S1520, the communication speed displaying method determining unit 230 identifies the group that the communication speed belongs to based on the information indicative of the communication speed acquired in the step S1518, and then determines the displaying method to show the condition of the communication speed.

In step S1522, the communication speed displaying method determining unit 230 sends display information to the communication speed information display controlling unit 240.

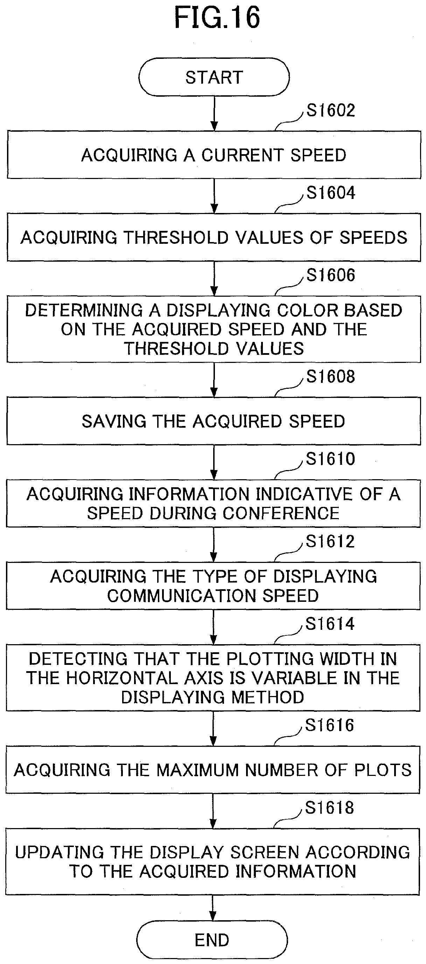

FIG. 16 is a flowchart illustrating a process executed by a terminal device in the case of displaying as illustrated in FIG. 12.

During communications such as a teleconference, the communication speed acquiring unit 220 acquires information indicative of the communication speed for video, audio, etc., from the communication controlling unit 210 through the network 2 (step S1602). Then, the communication speed acquiring unit 220 sends the acquired communication speed to the communication speed displaying method determining unit 230. Here, an acquisition of a communication speed is performed automatically when the communication terminal device 1 is booted or in response to a user operation.

During the communications, the communication speed displaying method determining unit 230 acquires threshold values of communication speeds from the communication speed threshold value/displaying method storing unit 250 after receiving the communication speed from the communication speed acquiring unit 220 (step S1604).

During the communications, the communication speed displaying method determining unit 230 compares the communication speed sent from the communication speed acquiring unit 220 with the threshold values of communication speeds acquired from the communication speed threshold value/displaying method storing unit 250 so as to identify the group that the communication speed during the communication belongs to based on the value of the communication speed sent from the communication speed acquiring unit 220 compared to the threshold values of communication speeds stored in the communication speed threshold value/displaying method storing unit 250, and then determines a displaying method such as colors to show the condition of the communication speed during the communications (step S1606). Then, the communication speed displaying method determining unit 230 provides the determined displaying method to the communication speed information display controlling unit 240.

The communication speed displaying method determining unit 230 saves the communication speed acquired from the communication speed acquiring unit 220 (step S1608).

The communication speed acquiring unit 220 acquires a communication speed for video, audio, etc., during the conference from the communication controlling unit 210 (step S1610). Then, the communication speed acquiring unit 220 sends the acquired communication speed during the conference to the communication speed displaying method determining unit 230.

The communication speed displaying method determining unit 230 acquires the type of displaying communication speed from the communication speed acquiring unit 220 (step S1612).

The communication speed displaying method determining unit 230 detects that the type of displaying communication speed acquired from the communication speed acquiring unit 220 is a displaying method where the plotting width in the horizontal axis is variable (step S1614).

The communication speed displaying method determining unit 230 acquires the maximum number of plots in the horizontal axis (step S1616). The communication speed displaying method determining unit 230 provides the acquired information concerning the maximum number of plots in the horizontal axis to the communication speed information display controlling unit 240.

The communication speed information display controlling unit 240 controls displaying of the display 120 through the display I/F 117, so as to show the condition of the communication speed during the communications according to the displaying method provided by the communication speed displaying method determining unit 230 (step S1618).

### <Variation>

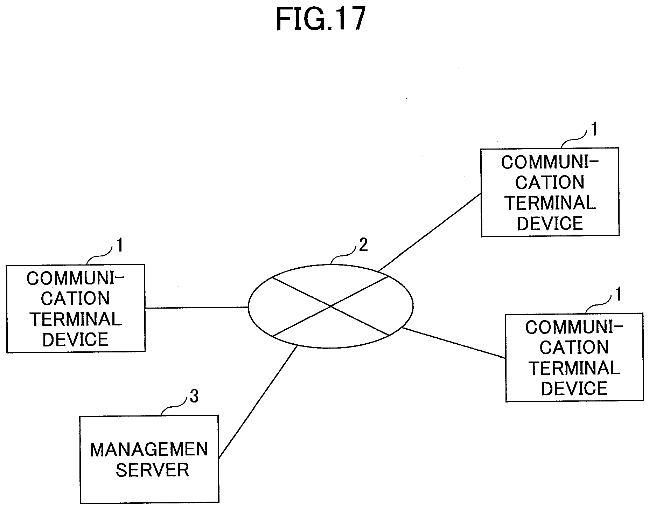

FIG. 17 is a diagram of a schematic configuration of the communication system serving as a communication system according to the embodiment of the present invention. To the network 2 is connected a management server 3 which is shared by each of the communication terminal devices 1.

The management server 3 controls an actual communication speed and an available communication speed. Specifically, the management server 3 controls each of communication bands which are actually used when a communication terminal device 1 transmits information such as video, audio, and other data, to other communication terminal devices 1, as well as each of the communication bands which are actually used when a communication terminal device 1 receives information such as video, audio, and other data, from the other communication terminal devices 1.

Furthermore, the management server 3 controls each of the communication bands which are available when a communication terminal device 1 transmits information such as video, audio, and other data, to other communication terminal devices 1, as well as each of the communication bands which are available when a communication terminal device 1 receives information such as video, audio, and other data, from other communication terminal devices 1.

FIG. 2 through FIG. 4 are applicable to the communication terminal device 1. However, the communication speed acquiring unit 220 acquires by measurement of information indicative of the communication speed for video, audio, etc., from the communication controlling unit 210 during communications such as a teleconference through the network 2.

In the embodiment and the modification described above, a video band, an audio band, and a data band may be displayed, instead of displaying the total band which is the sum of the video band, the audio band, and the data band.

According to the communication system of the embodiment, in addition to information concerning a communication speed of transmission and reception of video and audio transferred between the communication terminal devices during a conference, the minimum speed necessary to maintain an adequate quality of video and audio for a conference is preliminary stored as a threshold value. Then, when the communication speed falls below the threshold value during the conference, the communication speed may be displayed using colors to call attention to a decrease of the quality of video and audio for the conference, or the communication speed during the conference may be displayed using the number of scales instead of numerical values. In this way, even a user who is not familiar with the relationship between communication speed of transmission and reception and quality of video and audio can easily and intuitively understand information concerning communication speed, and even in a case where a speed is displayed only after recognizing a decrease in the quality of video during a conference, one can know whether or not the communication speed fell below a threshold value a few seconds ago.

That is to say, information concerning a communication speed of transmission and reception of video and audio transferred between the communication terminal devices during a conference is displayed not only with additional information such as colors and the number (of the unit) of scales, but also with graphs regularly plotting speeds of communication bands. In this way, when a user sees information concerning a communication speed, a user can easily know whether the displayed communication speed is enough to maintain a satisfying quality of video and audio, and when a quality of video and audio becomes lower during a conference, a user can easily know whether the cause is a decrease of the communication speed.

Although the present invention is described with references to the specific embodiment and modification, each of the embodiment and modification is just an example and a person skilled in the art would understand various variations, modifications, substitutions, replacements, etc. Although, as a matter of convenience of explanation, devices according to the embodiment of the present invention are explained using functional block diagrams, such devices may be configured with hardware, software, or combinations of hardware and software. The present invention is not limited to the embodiment described above, and various variations, modifications, substitutions, and replacements may be included without departing from the scope of the present invention.

The present application is based on and claims the benefit of priority of Japanese Priority Application No. 2014-014096 filed on January 29, 2014, with the Japanese Patent Office, the entire contents of which are hereby incorporated by reference.

### [Reference Signs List]

1 communication terminal device
2 network
3 management server
210 communication controlling unit
220 communication speed acquiring unit
230 communication speed displaying method determining unit
240 communication speed information display controlling unit
250 communication speed threshold/displaying method storing unit

## Claims

1. A communication device for performing a communication through a network, the communication device comprising:
a storing unit configured to store a plurality of threshold values of communication speeds indicative of ranges of communication speeds and, associated therewith, a plurality of displaying methods for indicating conditions of communication in the ranges of communication speeds, respectively;
an acquiring unit configured to acquire an available communication speed; and
a displaying unit configured to compare the available communication speed with the threshold values of communication speeds stored in the storing unit, determine a range of communication speeds that the available communication speed belongs to, and display a condition of communication in the available communication speed chronologically in a displaying method which corresponds to the determined range of communication speeds.

2. The communication device according to claim 1,
wherein the acquiring unit acquires the available communication speed during transmission and reception of video.

3. The communication device according to claim 1,
wherein the acquiring unit acquires the available communication speed by measurement of communication speeds which are under control of a management server.

4. The communication device according to claim 1,
wherein the storing unit stores the threshold values of communication speeds and, associated therewith, displaying methods for indicating, using a variety of colors, conditions of communication in the ranges of communication speeds, respectively.

5. The communication device according to claim 1,
wherein the storing unit stores the threshold values of communication speeds and, associated therewith, displaying methods for indicating, using a variety of scale units, conditions of communication in the ranges of communication speeds, respectively.

6. The communication device according to claim 1,
wherein the storing unit stores the threshold values of communication speeds and, associated therewith, displaying methods for indicating, using a variety of words, conditions of communication in the ranges of communication speeds, respectively.

7. A communication system including
a receiving communication device, and
a sending communication device for sending video to the receiving communication device,
the receiving communication device comprising:
a storing unit configured to store a plurality of threshold values of communication speeds indicative of ranges of communication speeds and, associated therewith, a plurality of displaying methods for indicating conditions of communication in the ranges of communication speeds, respectively;
an acquiring unit configured to acquire an available communication speed; and
a displaying unit configured to compare the available communication speed with the threshold values of communication speeds stored in the storing unit, determine a range of communication speeds that the available communication speed belongs to, and display a condition of communication in the available communication speed chronologically in a displaying method which corresponds to the determined range of communication speeds.

8. A communication method executed by a communication device for performing a communication through a network,
wherein the communication device includes a storing unit configured to store a plurality of threshold values of communication speeds indicative of ranges of communication speeds and, associated therewith, a plurality of displaying methods for indicating conditions of communication in the ranges of communication speeds, respectively, the communication method executed by a communication device comprising:
acquiring an available communication speed; and
comparing the available communication speed with the threshold values of communication speeds stored in the storing unit, determining a range of communication speeds that the available communication speed belongs to, and displaying a condition of communication in the available communication speed chronologically in a displaying method which corresponds to the determined range of communication speeds.

9. A computer-readable storage medium storing a program for causing a computer to execute the communication method according to claim 8.
